# EUROPEAN PATENT APPLICATION

(11) **EP 4 600 179 A1**
(43) Date of publication of application: **13.08.2025**
(21) Application number: 24156815.3
(22) Date of filing: 09.02.2024
(51) Int. Cl.: B65G 1/04, B65G 1/06, B65G 47/90, B65G 65/02, B65G 21/14, A47B 96/02, B65G 35/00, B65G 47/66

(54) **CARGO MANIPULATION SYSTEM**

(71) Applicant: Corren SA, 1206 Geneva (CH)
(72) Inventor: COHEN, Yoav, 1206 Genève (CH); COHEN, Nadav, 1206 Genève (CH)
(74) Representative: Novagraaf International SA

(57) **Abstract**

A conveying device (100), comprising :
- a picking portion (110), arranged to load or unload an item from a storage area,
- a receiving portion (120), adjacent to the picking portion (110),
- at least one conveying element (6), such as a chain or a belt, for transporting the item between the picking portion (110) and the receiving portion (120),

wherein the picking portion (110) comprises an articulated arm (110a) comprising a picking head (110h) arranged to be movable between :
- an extended position to load or unload the item,
- a retracted position,

wherein the articulated arm (110a) comprises an articulated buffer portion (110b) connected to the picking head (110h) and arranged to unwind when the picking head (110h) moves to the extended position.

## Description

The present invention relates to the conveying devices, in particular for logistic application, and to platforms related thereto.

The conveying devices are generally known in the prior art.

Cargo transport, manipulation, and storage is an essential part of all activities concerning goods. Whether automatically or manually stored, transported and treated, cargo may come in many packing formats: bulk, individual article, grouped into boxes, pallets, etc. The format of cargo storage has a fundamental impact on the level of cargo density per volume unit in a warehouse and has significant impact on the resolution, with which the cargo, whether bulk or itemized, can be managed and manipulated. This is true for both the physical and logical treatment of the cargo. The format of storage depends directly on the method by which the cargo is put away in storage and retrieved from it.

For this reason, presented herein this new cargo physical manipulation system, which is capable of treating a wide variety of cargo formats, ranging from bulk, item by item, boxed palletized and grouped together in other forms.

An aim of the present invention is to overcome the disadvantages of the prior art mentioned above, and in particular to propose a conveying device and a platform giving more flexibility for the storage, being more efficient, more compact and easier to manufacture.

That is, an object of the present application is a novel cargo manipulation system also referred to as a collector or a conveying device. A full assembly may be provided with a combination of a collector machine, floor support platform and accessories, providing all together a system, which can carry out a wide variety of physical manipulations on cargo, packing formats, and circumstances of use.

A first aspect of the presentation invention concerns a conveying device, comprising :
- a picking portion, arranged to load or unload an item (or at least one item or a plurality of items meantime or sequentially) from a storage area (or storage cell),
- a receiving portion, adjacent to the picking portion,
- at least one conveying element, such as a chain or a belt, for transporting the item between the picking portion and the receiving portion,
wherein the picking portion comprises an articulated arm comprising a picking head arranged to be movable between :
- an extended position to load or unload the item,
- a retracted position, wherein the articulated arm comprises an articulated buffer portion connected to the picking head and arranged to unwind when the picking head moves to the extended position.

This allows to propose a conveying device able to offer flexibility in the storage area treatment, easy to operate and to manufacture and compact.

The invention may also be defined according to the following features, taken individually or in combination.

Advantageously, an unwound part of the articulated buffer portion is arranged to form the picking head in the extended position.

This allows the picking head to be further introduced into the storage area.

Advantageously, the at least one conveying element is arranged on the picking portion and/or on the receiving portion.

This allows to move the items from the picking portion to the receiving portion.

Advantageously, the at least one conveying element has a conveying buffer portion.

This allows to store a portion of the conveying element for compactness purpose and flexibility of operation.

Advantageously, the conveying device further comprises an actuator arranged to adjust the length of the conveying buffer portion.

This allows the articulated arm to move to the extended position

Advantageously, the receiving portion is arranged to be under the picking portion or on a back side (or rear side) of the picking portion.

This allows to transport the item to the receiving portion, so that the items can be move latter on to another place.

Advantageously, the articulated arm is formed of a plurality of articulated segments linked or articulated together.

Advantageously, the conveying device further comprises a locking device arranged to :
- lock the unwound articulated segments together when the picking head moves to the extended position, and/or
- unlock the wound articulated segments when the picking head moves to the retracted position.

Advantageously, the articulated buffer portion is arranged to be wound when the picking head moves to the retracted position.

Advantageously, the articulated arm comprises at least one support leg.

This allows to support the articulated arm when introduced in the storage area, so as to allow long introduction is the storage area (e.g. introduction of more than one meter, preferably more than two meters, preferably more than three meters, preferably more than four meters, preferably more than five meters).

Advantageously, the at least one support leg has one or more wheels, or sliding means such as a sliding plate.

Advantageously, the at least one support leg is arranged to be foldable.

This allows to adjust the height of the articulated arm and allow the conveying device to be supported by the storage area and the platform itself, therefore having a lite mechanical structure.

Advantageously, the articulated arm comprises a plurality of support legs, preferably arranged along a longitudinal direction of the articulated arm.

This allows to pick up heavy items far away from the receiving portion (i.e. at the end of the storage area).

Advantageously, the conveying device further comprises a frame supporting the picking portion, the receiving portion and the conveying element, and arranged to be placed in front of the storage area.

Advantageously, the conveying device further comprises a plurality of picking portions, receiving portions and conveying elements arranged in rows, preferably side by side.

Advantageously, at least one of the plurality of conveying elements is arranged to be activated in a conveying direction different from the conveying direction of the other conveying elements of the plurality of conveying elements.

Advantageously, the conveying device further comprises a grabbing system or suction system, and preferably the picking portion and the grabbing system or suction system are configured to lift or retrieve a top item or a bottom item.

This allows to use the suction system as transport means, for example from the storage area to the receiving portion, from the storage area to the picking portion, from the picking portion to the receiving portion, and any combination thereof. This also allows to be used as a barrage mechanism allowing the picking portion to pick the bottom item from a pile.

Advantageously, the articulated arm is arranged to rotate or agitate the item stored in the storage area, or to acknowledge and/or count one or more items in the storage area or to perform stock take of items.

Advantageously, the conveying device further comprises a liquid sprayer, such as a water sprayer, or a gas sprayer, such as a compressed air sprayer or an air sprayer.

Advantageously, the conveying device further comprises two picking portions, preferably arranged on opposite sides of the conveying device (in backward / frontward direction or in loading / unloading direction).

The picking portions can be duplicate in an opposite direction, allowing the picking portion to dynamically "connect" such as a bridge two storage area.

The picking portions can be also installed side by side or staggered (quincunx).

The invention concerns, in a second aspect, a channelled platform arranged to receive the picking portion of the conveying device according to the first aspect.

This allows to provide the above mentioned advantages, at the platform level.

It is meant by channelled that the platform has grooves or furrows.

Advantageously, the channelled platform comprises protrusions or grooves arranged to form a channel configured to receive the picking portion.

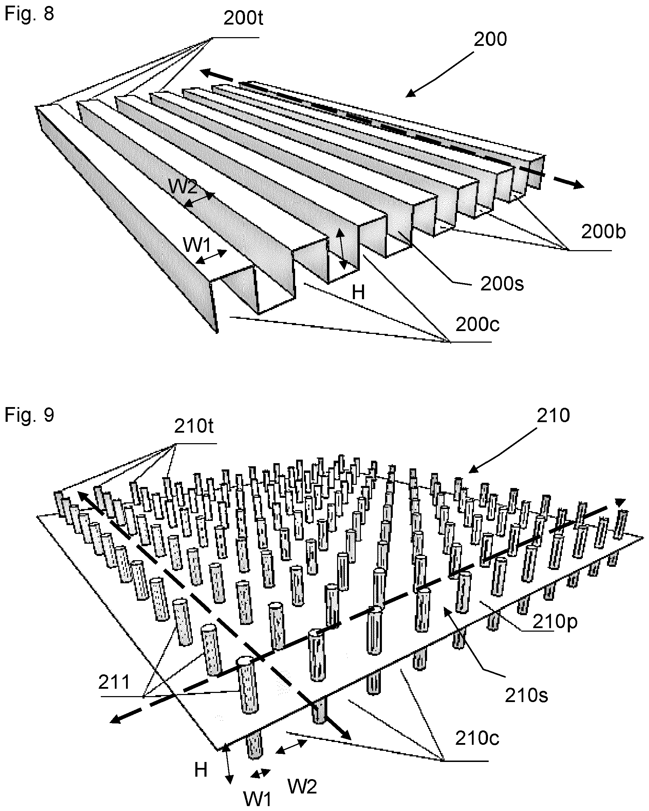

Advantageously, the protrusions or the grooves have a dimension as per the reasoning disclosed here after, in particular with respect to figures 8-9 and/or provided on page 14, § 105.

Advantageously, at least one channel of the channelled platform is open on one or more sides of the channelled platform.

Advantageously, the channelled platform further comprises a hole, such as a hole having a round shape or an oval shape, for receiving the item, and preferably one or more (orientation) wheels or one or more guiding portions arranged on sides of the holes. Advantageously, the channelled platform may comprise one intermediate level or channel, arranged between the support plate high floor and the support plate low floor. The intermediate level and the support plate high floor may have a hollow portion to form a hole to store items therein. This allows to form (circular or oval, etc) shapes to receiving items therein.

Preferably, the conveying device can be installed or mounted on a stacker crane, with or without general wheels for trans-docking of trucks, on a forklift or on any other transport device. When onboarded, the conveying device can be moved in retracted position or in extended position.

In other words, the invention concerns an apparatus for manipulating a merchandise to be loaded on, or unloaded from, a rack, comprising :
- a frame arranged to be positioned in front of the rack,
- at least one articulated arm arranged to be movable between a curved or inclined position wherein the at least one articulated arm is folded in the frame and an extended position wherein the at least one articulated arm can be introduced in the rack and manipulate the merchandise,
- at least one rear support arranged on the frame and on a rear side of the least one articulated arm, to receive the merchandise, and
- at least one transportation element, such as a chain or a belt, arranged to contact the merchandise and move the merchandise between the at least one back support, the at least one articulated arm in the extended position and the rack.

Other features and advantages of the present invention will appear more clearly from the following detailed description of particular non-limitative examples of the invention, illustrated by the appended drawings where:
- figure 1 represents a conveying device according to the present invention,
- figure 2 represents a detailed view of an upper portion of the conveying device according to the present invention, in perspective view,
- figure 3 represents a detailed view of a lower portion of the conveying device according to the present invention, in perspective view,
- figure 4 represents a perspective view of the conveying device according to the present invention, partly introduced in a storage area,
- figure 5 represents an elevation view of the conveying device according to the present invention, partly introduced in the storage area,
- figure 6 represents another elevation view of the conveying device according to the present invention, fully introduced in the storage area,
- figure 7 represents a perspective view of the storage area,
- figure 8 represents a perspective view of a channelled platform according to the invention,
- figure 9 represents a perspective view of the channelled platform according to an embodiment of the present invention,
- figure 10 represents a detailed view of legs of the conveying device according to the invention,
- figure 11 represents a detailed view of a driving mechanism of the conveying device according to the invention,
- figure 12 represents a detailed view of a chain arrangement of the conveying device according to the invention,
- figure 13 represents a perspective view of the chain arrangement of the conveying device according to the invention,
- figure 14 represents a detailed view of a sensor of the conveying device according to the invention,
- figure 15 represents a perspective view of the channelled platform according to another embodiment of the present invention with a belt,
- figure 16 represents a perspective view of the channelled platform according to another embodiment of the present invention with orientation wheels,
- figure 17 represents a perspective view of the channelled platform according to another embodiment of the present invention with orientation wheels,
- figure 18 represents a top view of the channelled platform according to another embodiment of the present invention with orientation wheels,
- figure 19 represents a top view of the channelled platform according to another embodiment of the present invention with orientation wheels,
- figure 20 represents a perspective view of the channelled platform according to another embodiment of the present invention with orientation wheels,
- figure 21 represents a perspective view of the conveying device according to another embodiment of the present invention with a grabbing system,
- figure 22 represents two conveying devices installed on opposite directions.

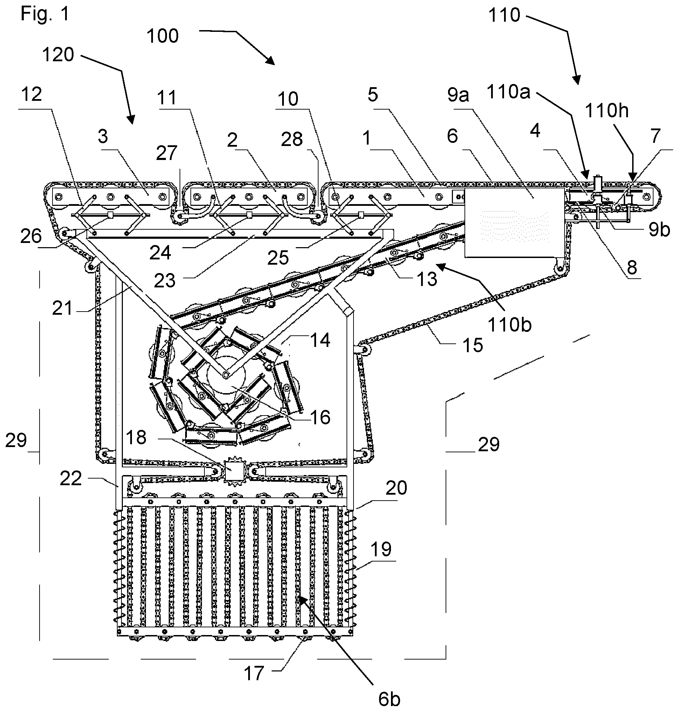

Figure 1 represents a conveying device 100 according to the present invention.

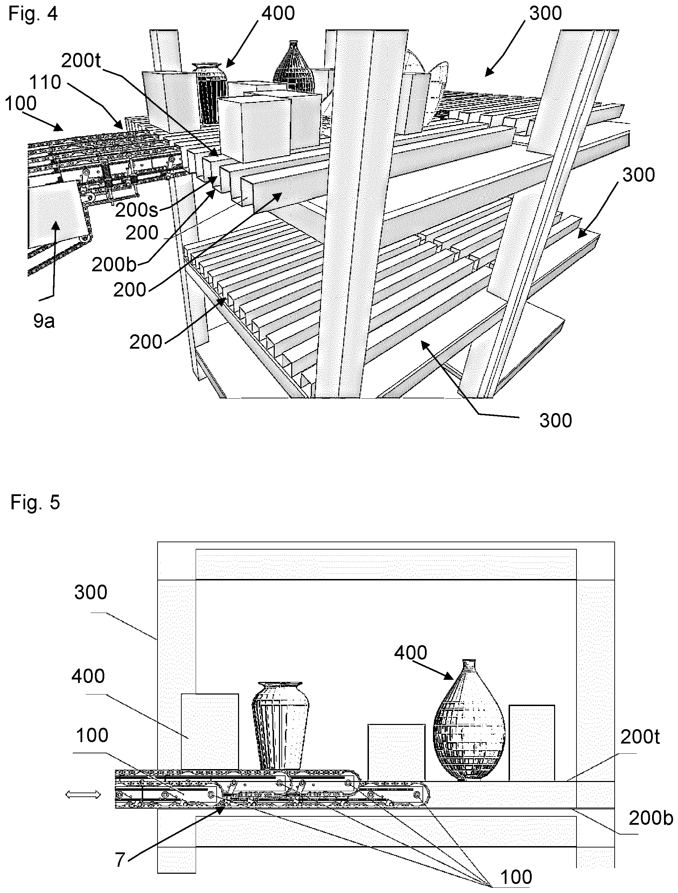

The conveying device 100 comprises a picking portion 110, arranged to load or unload an item 400 from a storage area 300 (or storage cell 300) represented in figure 4.

The conveying device 100 further comprises a receiving portion 120, adjacent to the picking portion 110 and at least one conveying element 6, such as a chain 6 or a belt, for transporting the item 400 between the picking portion 110 and the receiving portion 120.

The picking portion 110 comprises an articulated arm 110a with a picking head 110h arranged to be movable between :
- an extended position to load or unload the item 400 from or onto the storage cell 300, and
- a retracted position, wherein the articulated arm 110a comprises an articulated buffer portion 110b connected to the picking head 110h and arranged to unwind when the picking head 110h moves to the extended position.

An unwound part of the articulated buffer portion 110b is arranged to form the picking head 110h in the extended position.

The chain 6 is arranged on the picking portion 110 and/or on the receiving portion 120, so as to transport the item 400 from the picking portion 110 to the receiving portion 120 or vice-versa.

The chain 6 has a conveying buffer portion 6b to store a portion of the conveying element 6 and to allow extension of the picking head 110h.

The receiving portion 120 is arranged on a rear side of the picking portion 110, so that it is possible to retrieve the articles 400 moved to the receiving portion 120 after they have been picked up in the storage cell 300 by the picking head 110h, and vice-versa for loading articles 400 to the storage cell 300.

The articulated arm 110h is formed of a plurality of articulated segments 4 linked or articulated together.

The conveying device 100 further comprises a locking device arranged to :
- lock the unwound articulated segments 4 together when the picking head 110h moves to the extended position, and/or
- unlock the wound articulated segments 4 when the picking head moves to the retracted position.

The articulated buffer portion 110b is arranged to be wound when the picking head 110h moves to the retracted position.

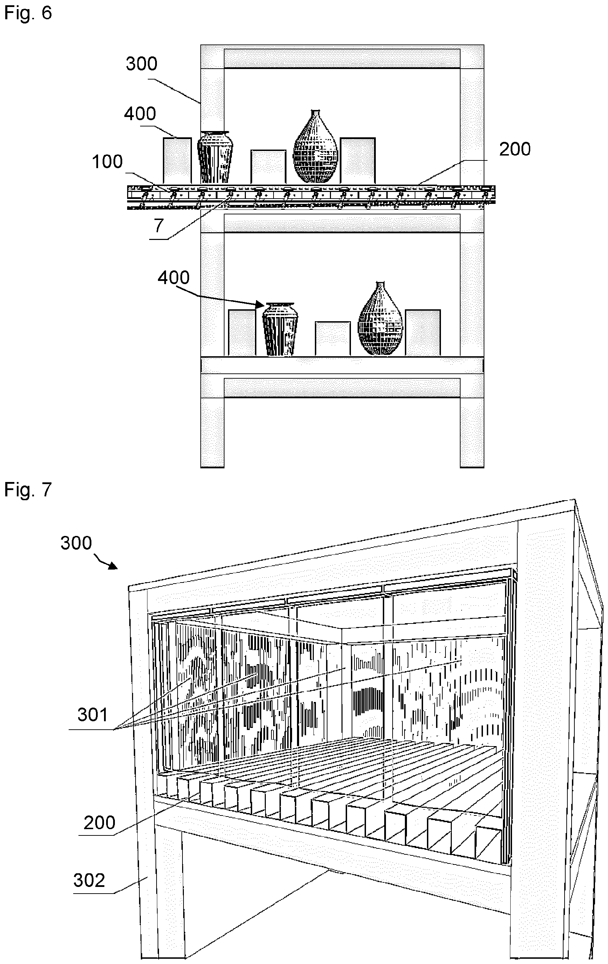

The articulated arm 110a comprises support legs 7 visible on figure 6.

The support legs 7 are equipped with wheels, or sliding means and are preferably foldable. The support legs 7 may be activated by a cable pulling / releasing foldable wheeled leg 8.

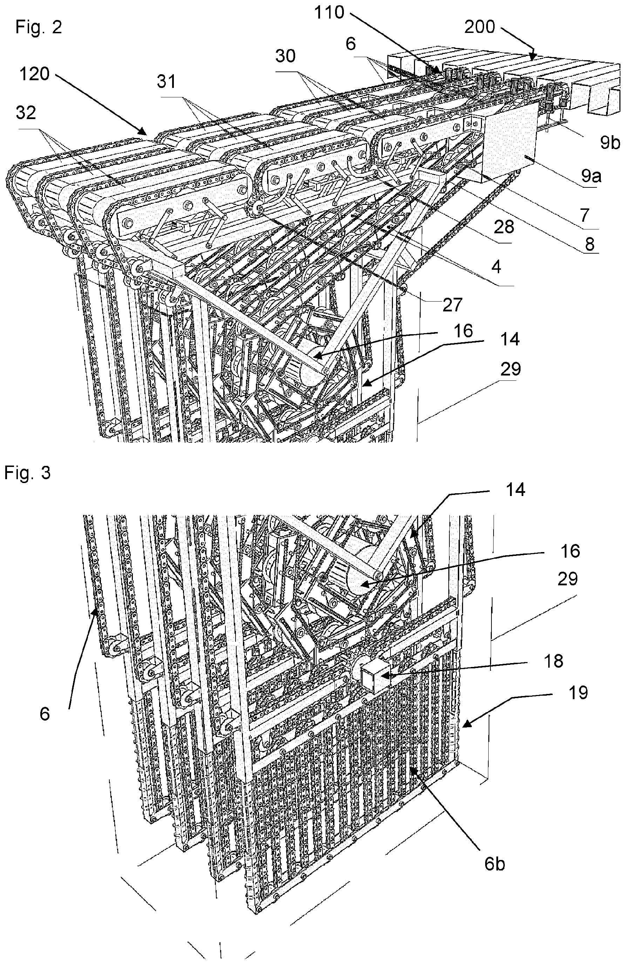

The conveying device 100 has preferably a plurality of picking portions 110, receiving portions 120 and conveying elements 6 arranged in rows (side by side as shown in figure 2).

That is, each of these picking portions 110 (also called active layers) is linked to a fixed support structure 23, against which there are rigid columns, 1, 2, 3 forming the receiving portion 120, with bearings, holding the chain, 6 and which can be made higher or lower by structures 10, 11, 12, actuated by actuators 24, 25, 26. To rigid column 1, in direct continuation, through unit 9a, 9b (foldable support column fixing actuation unit and cable pulling / releasing actuation unit) is connected an articulated varying length column 4, also called together articulated units or segments.

This articulated foldable column (AFC), that is to say the set of segments 4, is loose and foldable as it is wrapped or folded around storage wheel 16 (see segments 4 and articulated foldable support column - arranged in circular form taking wheel reduced space), and it is made rigid under tension between the chain 6 and the fixing unit 9a, when in the extended position.

In addition to the active layers 110 (also called picking portions 110), in parallel to them, are a variable number of non-active layers (also called receiving portions 120). Each non-active layer 120 is supported by the horizontal fixed bar, 23, which may have reinforcement bars 21 and structural vertical bars 22.

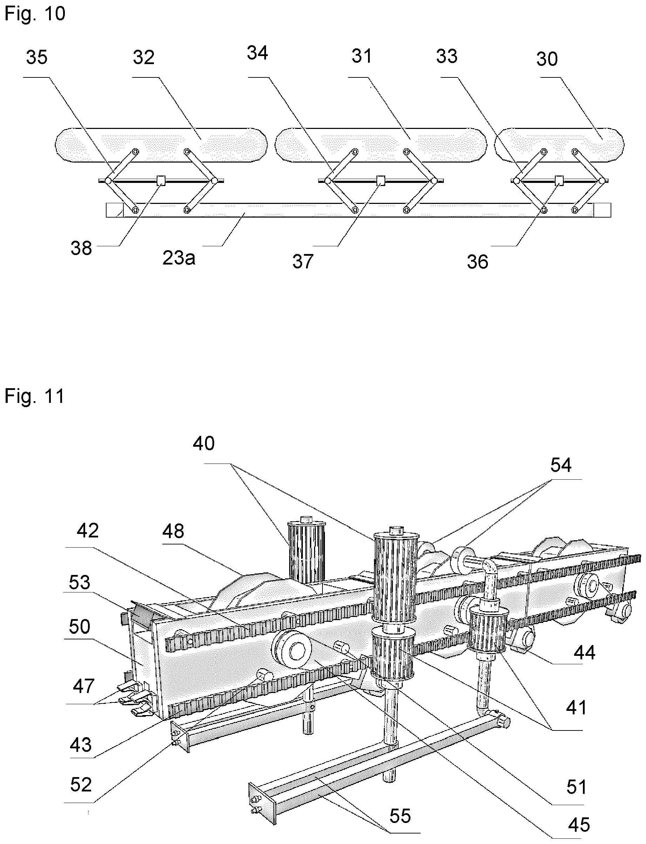

Each non active-layer 120 (receiving portions 120) is divided into three or more fixed bars/columns 30, 31, 32 visible in figure 2, which are made to go higher or lower as actuated by adjustable legs 33, 34,35 actuated by motors 36, 37,38 visible in figure 10.

The purpose of these horizontal height changing columns is, by becoming higher or lower than the active layers' chains 6, to allow cargo to sit on the chains, or on the fixed bars, and therefore be moved by the chains or not. This can be seen more clearly in perspective, figure 2, where we can see the active/non-active layers 110/120. As can be seen in figure 2, the conveying device is arranged to introduce the AFC (set of segments 4 in unfold position) in the cavity channels of the support platform 200 and can be extended inside them.

The conveying device may also be equipped with a cover 29, the cover 29 may also be the overall support of the conveying device (or collector machine) and holds all the layers together. The overall support can be installed on the forklift or the like, as mentioned above.

The chain 6 is engaged with a chain rotation support bearing 5. The chain 6 runs along the receiving portion 120, the picking portion 110 and the buffer portion 6b. The chain 6 has a chain portion returning from the outside into the inside 15.

The chain height change facilitators 27, 28 allow for the independent height setting of 14, 23. The excess chain is kept under tension of bearings 17, sliding bar 20, on the vertical bars 19, so as to allow the overall chain to remain under tension.

Figure 2 represents a detailed view of an upper portion of the conveying device 100 according to the present invention, in perspective view.

The system gives each storage cell the capacity to become a temporary conveyor belt of variable length.

Each non active-layer 120 (receiving portions 120) is divided into three or more fixed bars/columns 30, 31, 32 visible in figure 2, which are made to go higher or lower as actuated by adjustable legs 33, 34,35 actuated by motors 36, 37,38 visible in figure 10.

Preferably, the extended position of the picking portion 110 is when the picking portion head 110h is located into the storage area 300. The retracted position of the picking portion 110 is located outside the storage area 300. The articulated buffer portion 110b is located below the receiving portion 120 so as to ease the transfer from the picking portion 110 to the receiving portion 120. The front side of the picking portion 110 is the side to be positioned in front of the storage area 300. The back side of the picking portion is the side, opposite to the front side, that is to say away from the storage area 300. The receiving portion 120 is placed on the back side of the picking portion 110.

Figure 3 represents a detailed view of a lower portion of the conveying device 100 according to the present invention, in perspective view.

The segments 4 are wound, wrapped or folded, around the storage wheel 16. It is generally meant by wind to encircle or cover with something pliable, to bind with loops or layers.

Figure 4 represents a perspective view of the conveying device 100 according to the present invention, partly introduced in the storage area 300 and the platform 200.

The storage cell 300 or storage area 300 is generally a volume of a given height, width, and depth, serving for the long/short term storage of cargo in whichever format. It can be static such as on a shelving structure, or mobile, such as on a conveyor belt, vehicle, part of a manufacturing process, etc. Storage area is e.g. a rack, a corrugated rack, or a belt. A cargo (also generally referred as item 400 to be picked up or loaded) refers to goods in any format, bulk or itemized. A support plate or a platform refers to a patterned floor support platform.

The support plate or channelled platform 200 serves as the floor on which cargo 400 is placed during storage. The spacing between high channels or between support columns, is designed so as to be sufficiently small so that the cargo 400 does not fall into the cavities. The cargo 400 is therefore, during rest, sitting on the high floor of the platform 200, which is the high channel. The collector machine or conveying device 100 is made of a number (variable) of active layers 110 in parallel entering into channels of the channelled platform 200.

For cargo retrieval, the cargo 400, which is sitting in the storage cell 300 on the support platform 200 is resting on the high channels of the channelled platform 200, or high floor 200t. To recuperate the cargo 400, the picking portion 110 is extended inside the cavity channels 200s. The low floor 200b is used as support for the foldable legs 7,45, in folded position, limited by pin 51. In this position, the picking portion 110 (AFC segments 4), is rolling inside the channelled platform 200, in the channels 200s without touching the cargo 400 above. Once the picking portion 110 reaches the desired depth, the foldable legs 7, 45 are pulled by the actuator 41, using the cable, 43, to an upright position, leaning against pin 52. In this position, the chain 6 of the conveying device 100 of each of the active layers surpasses the height of the support platform 200, high floor and the cargo 400 rests on the picking portion 110 (picking head 110h) of the active layers and their chain 6. The foldable legs 7, 45 and wheels 44 are kept upright by the cable 43 and provide support for the picking portion 110 and the cargo 400 above it at fixed intervals. To retrieve the cargo 400, the chain 6 is activated by the motor 18 and the cargo 400 starts to be shunted outwards.

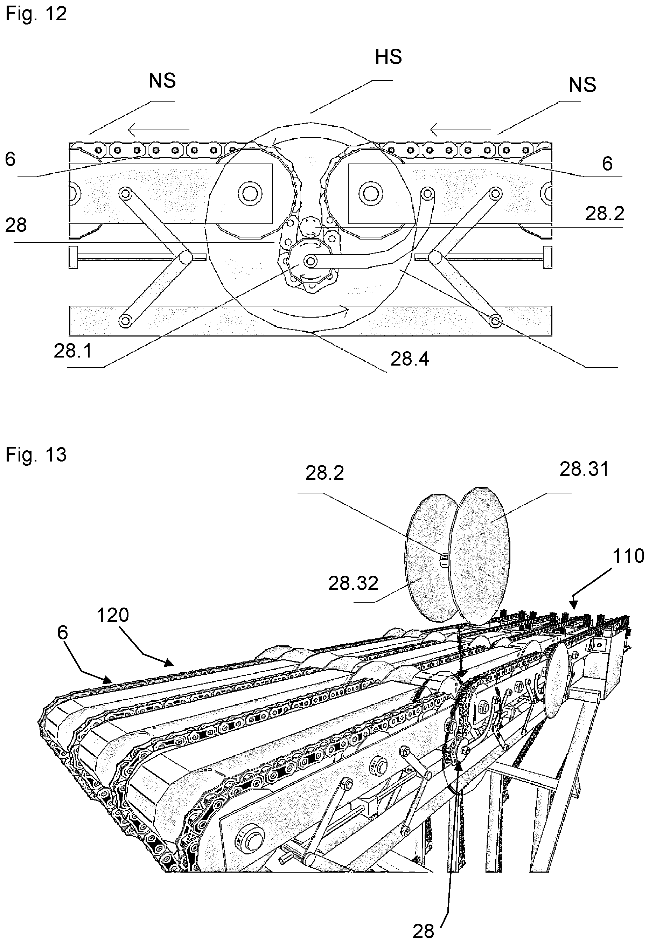

To separate the articles 400 upon exit from the storage cell 300 many strategies can be adopted: the first is that the article 400 during the passage between fixed bar 12, fixed bar two on the chain 6, through height change facilitator 28, a small height drop allows the article 400 to gain a small distance relative to the adjacent article behind it. The second method is by placing a speed accelerator. The article speed accelerator is made of a central cylinder, 28.2 of the same size as chain direction change wheel 28.1, as it will be explained with more detailed with respect to figures 12-13. The third method is that non-active layer is raised, intermittently thus generating distance.

The picking portion 110 can be advanced until the desired depth.

After cargo 400 has been transported on the chain, 6, the cable 43, is released by actuator 41 and foldable leg 7, 45 is folded again by the spring (not shown).

After this, the lowered AFC can be retracted within the cavity channels without interaction with the cargo 400 of the storage cell 300.

The conveying device 110 may be made of a plurality of AFC columns. As part of its capabilities, the AFC, for each active and independent unit has the capacity to modulate its :
- height,
   - direction/speed of chain 6.
- foldable legs 7 folded/upright.
   - extent of depth opened.

This has the advantage of creating combination action between the different active layers 110. The conveying device 100 has also in its active layers 110 the capacity to change the height of the various rigid segments. In addition, there are the non-active segments, which can be pushed up or down.

The folding legs 7 provide regular support under the cargo 400 during transport in and out. This allows the weight of the cargo 400 carried to be supported directly by the floor underneath (e.g. by support plate low floor 200b), and not by the strength of the AFC nor by the strength of the conveying machine's carrying vehicle/support. This allows for a much lighter structure and a much deeper cargo 400 collection capacity.

Figure 5 represents an elevation view of the conveying device 100 according to the present invention, partly introduced in the storage area 300.

The picking portion 110 can be introduced in the storage cell 300, via the channels or grooves of the channelled platform 200. Items 400 are loaded on top 200t of channels (support plate high floor 200t) of the channelled platform 200. The picking portion 110 retrieves the articles 400 and lifts them up (the chain 6 is in contact with the article 400), at a level higher than the top 200t, and then the picking portion 110 come back to the outside of the storage cell 300.

It is possible to pick one or more articles 400 in the same time or to remove the articles 400 sequentially.

Figure 6 represents another elevation view of the conveying device 100 according to the present invention, fully introduced in the storage area 300.

For picking articles 400 far away from the entry side (i.e. on the right part of the figure 6), it is possible to unfold the support legs 7 so that the support legs 7 can be supported by the bottom 210b of the channelled platform 200 (support plate low floor 210b).

Figure 7 represents a perspective view of the storage area 300.

By adding accessories, such as curtain 301 or obstacles of various types on the high channels, the cargo 400 can be uncluttered and separated, and reorganized.

The storage cell 300 may be equipped with post 302 of storage cell 300, for structural purpose of the cells 300.

Figure 8 represents a perspective view of a channelled platform 200 according to the invention.

The channelled platform 200, also called support plate 200 is represented with a corrugated or serrated shape.

The channelled platform 200 has the low floor 200b, the lower crenels 200c, the upper crenels 200s and the high floor 200t.

The picking portions 110 (picking head 110h) can be introduced in the lower crenels 200c for full lifting of the channelled platform 200. The picking portions 110 can be introduced in the upper crenels 200s for lifting of items 400, e.g. one by one, initially placed on the high floor 200t. The support legs 7 of the picking portion 110 can be in contact with the low floor 200b, so as to pick up articles 400 far away from the entry side of the platform 200.

The dimension of the corrugation shall be based on several consideration below.

The width W1 of the high floor protrusion (or corrugation teeth) shall depend on the capacity of the article 400 with its weight, to be carried without being punctured due to the division of the weight on the surface of contact

The grooves (width W2 between high floor to high floor) has to be of a dimension that is sufficiently small (less than 25%) of the item surface of contact, so as to prevent from falling into the grooves.

With regards to the height H of the corrugation teeth, this height has to be sufficiently high to enable the AFC with folded legs to enter within the channel without interfering with the cargo sitting on top of the corrugation. And once the wheel legs are unfolded, enable the cargo 400 to be fully supported by the AFC without any contact with the high floor 200t. In the event the cargo 400 is not rigid, its deformation towards the bottom when lifted needs to be taken into consideration by ensuring that the AFC rises high enough to prevent contact between the deformed cargo and the high floor.

Therefore, for instance items 400 of dimensions 30x30x30 cm, the corrugations could be of 10 cm wide (W1, W2) and 5 cm high (H). The thickness of the metal sheet forming the channelled platform 200 is e.g. 0.5 mm, 1 mm, 2 mm, 3 mm or more. Overall dimension is e.g. 130 cm by 130 cm, or 100 cm by 100 cm or 200 cm by 200 cm. It could be adapted as necessary, e.g. 100 cm by 200 cm.

Similar dimensions can be applied to the platform 210 with respect to figure 9.

Figure 9 represents a perspective view of the channelled platform 210 according to an embodiment of the present invention.

The platform 210, which is an embodiment of the channelled platform 200, has a pattern of columns 211 rather than a pattern of corrugations. This platform 210 allows the conveying device to be introduced from various angles (in particular form perpendicular direction), and therefore shunt products on different paths. The columns 211, and channels formed therebetween, preferably on both side of a middle plate 210p, allow the cargo 400 to be taken as a group in a similar manner to lifting a pallet.

The platform 210 with the columns 211 has the high floor 210t, the support plate - main plate 210p, the lower crenels 210c and the upper crenels 210s. The crenels 210c, 210s are formed by the spaces between the columns 211.

The picking portions 110 can be introduced in the lower crenels 210c for full lifting of the channelled platform 210. The picking portions 110 can be introduced in the upper crenels 210s for lifting of items 400, e.g. one by one, initially placed on the high floor 210t.

The platform 210 with the columns 211 has the advantage of allowing picking from everywhere, e.g. left-right, or front-back, in particular from perpendicular directions. This allows cross-docking operation, for example from trucks arranged side by side.

As mentioned above, similar dimensions W1, W2, H, can be applied to the platform 210 in comparison to figure 8. In this case, W1 is the diameter of the columns 211 if the columns 211 are cylindrical. Columns 211 can be of other shape such as column with square or rectangular cross-section. W2 is the distance between adjacent columns 211, H is the hight of the columns 211. Said values W1, W2 and H may applied to columns 211 on both sides of the main plate 210p. It is also possible to have different shapes or sizes on each side of the main plate 210p. The thickness of the metal sheet forming the main plate 210p is e.g. 0.5 mm, 1 mm, 2 mm, 3 mm or more. Overall dimension is e.g. 130 cm by 130 cm, or 100 cm by 100 cm or 200 cm by 200 cm. It could be adapted as necessary, e.g. 100 cm by 200 cm. The diameter of the columns 211 is e.g. 1 cm, 2 cm, 3 cm or more.

Figure 10 represents a detailed view of legs of the conveying device 100 according to the invention.

Each non active-layer 120 (receiving portions 120) is divided into three or more fixed bars/columns 30, 31, 32 also visible in figure 2, which are made to go higher or lower as actuated by adjustable legs 33, 34,35 actuated by motors 36, 37,38 visible in figure 10. The legs 33, 34, 35 are articulated and supported by the structure 23a.

Figure 11 represents a detailed view of a driving mechanism of the conveying device 100 according to the invention.

The articulated foldable column (AFC) is made of interconnection units 13. Each such unit is made of two sides of the body 50, connected by a central plate. It has a bearing 48, supporting the chain 6, and wheels 44, which are connected to the main body 50, through pivoting foldable legs 45 (7), and limited in their folding range by pins 51 and 52. The pivoting foldable legs (45, 7) are coiled up by an internal spring coil (not shown). Two attachments 47 are connecting these units one to the other. On the side of the main body 50 are corrugated actuation strips 42, which allow the actuators of unit 9A (40) to push and rigidity the AFC. An additional corrugated actuation cable, 43 is connected to the foldable legs and pressed against actuator 41 of unit 9b by the rollers. In each active layer, the chain 6 is wrapped around and goes through a series of bearings as shown and is actuated by an actuator 18. The length of the rigidified AFC can be adjusted by unit 9a and by taking the excess AFC, in rolled form, into the folding storage wheel 16. The excess chain is kept under tension of bearings 17, sliding bar 20, on the vertical bars 19, so as to allow the overall chain to remain under tension. The chain height change facilitators 27, 28 allow for the independent height setting of 14, 23. The unit 9 AB is the unit taking the AFC from the storage wheel 16 in its loose form and pushing it against the chain, 6, for a double purpose: first, to rigidity it and second to establish its length. The AFC is the part of the active layer which enters the storage cell 300 through the cavity channels 200c, 200s of the support platform 200, or through the undercarriage. 9B actuates, at any length, the cable 43, controlling the foldable legs 45, with their wheels 44. These legs may be in a folded position against pin 51, or upright position against pin 52, (or in intermediate positions for special functions). When in folded position, the wheels 44, roll on the bottom part 200b of the patterned floor 200 when pushed in or out of the storage cell 300.

In this position (against pin 51), the top of the AFC is below the height of the high channel and therefore may enter or exit the platform cavity channels without interacting with the cargo above the high channel. When the foldable legs are upright (i.e. unfolded position) against pin 52, pulled by the actuator 41 of 9B, the AFC becomes higher than the channel high floor, and therefore the cargo sits on its chain 6. Since the foldable leg has a spring which rotate into a folded direction, pin 51 establishes the endpoint of the folding. Inversely when the foldable leg is actioned (pulled) to unfold, pin 52 establishes its extended position's endpoint which is preferably 2 or 3 degree after it is completely perpendicular to allow that it is stable in its extended position. Further, the actuator 41 activates the foldable leg. The forward / backward actuator of main structure 40 activates the AFCs to move them in or out of the platform 200, 210. In addition, the forward / backward actuator of main structure 40 and the actuator 41 can work together according to a certain programme or completely independently. The locking device 54 is arranged to :
- lock the unwound articulated segments together when the picking head moves to the extended position, and/or
- unlock the wound articulated segments when the picking head moves to the retracted position.

Figure 12 represents a detailed view of a chain arrangement of the conveying device 100 according to the invention.

The article speed accelerator 28.4 is made of a central cylinder, 28.2 of the same size as chain direction change wheel 28.1.

Figure 13 represents a perspective view of the chain arrangement of the conveying device 100 according to the invention.

The central cylinder 28.2 is rigidly connected to, larger radius, twin article cylinders, 28.31 and 28.32. As the chain 6 advances, the chain direction change wheel 28.1 rotates. The central cylinder 28.2, which is pressed against 28.1 rotates as well at the same perimeter speed. Since the twin article cylinders 28.31 and 28.32 have the same angular speed as 28.2, the speed of their perimeter is higher than the speed of the chain and in the same direction. Their radius is designed to reach higher than the chain for this reason, the articles rest on the twin cylinder which accelerate the articles, and therefore separate them from the adjacent articles, thus allowing the collector machine to treat them individually.

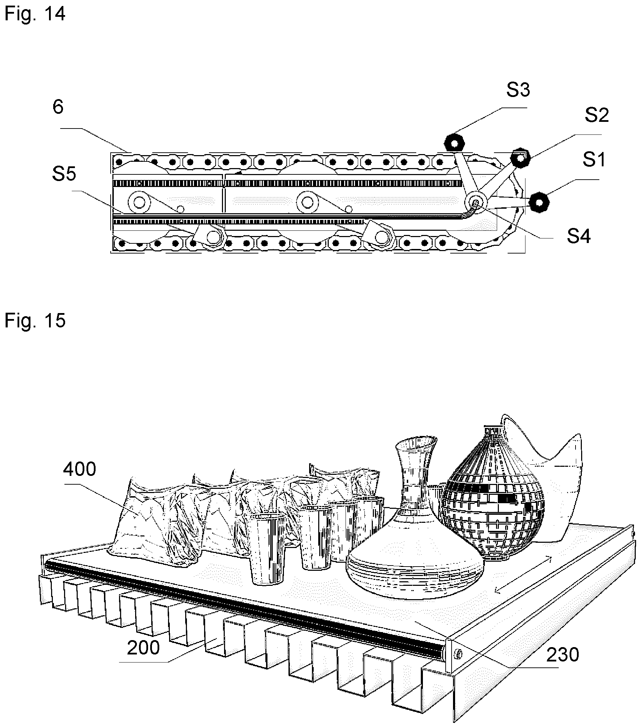

Figure 14 represents a detailed view of a sensor of the conveying device 100 according to the invention.

At the tip of the picking portion 110, there are three sensors;
- sensor activated, when storage cell 300 full depth has been reached, S1,
- sensor activated when cargo 400 already in the storage cell has been reached, S2.
- sensor activated when cargo 400 brought from the outside has reached the tip of the AFC, S3.

The picking portion 110 is also equipped with a flexible connector S4 for sensor and one or more feedback back electrical cables S5, for sensors.

Figure 15 represents a perspective view of the channelled platform 200 according to another embodiment of the present invention with a belt.

For very small or cumbersome cargo 400 types, a conveyor belt type accessory 230 can be added and the chain 6 of the picking portion 110 will push against the lower part of such a conveyor belt 301 and therefore the upper belt will move the cargo 400.

Compression of cargo during storage to fill a higher portion of the volume is feasible with this system.

Bulk or different type of articles may be carried on smaller support platforms which can be moved on the main support platform and which allow access to the individual articles on the smaller support platform.

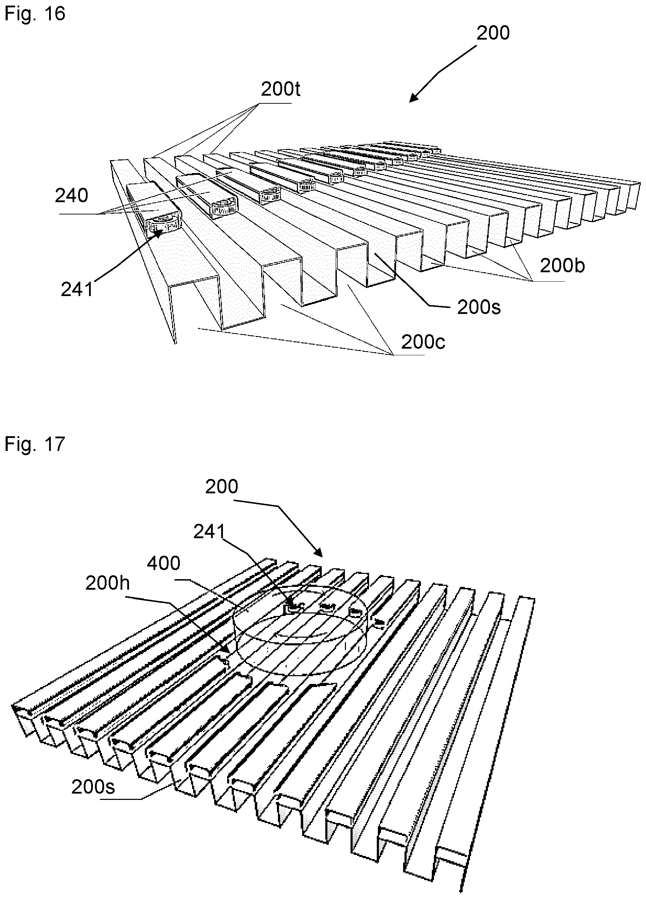

Figure 16 represents a perspective view of the channelled platform 200 according to another embodiment of the present invention with orientation wheels 241.

The platform 200 is equipped with orientation wheels 241, for carousel purpose. The wheels 214 allow the items 400 to be rolled on the wheels, for e.g. rotation.

The wheels 214 may be within boxes 240.

Figure 17 represents a perspective view of the channelled platform 200 according to another embodiment of the present invention with orientation wheels 241.

The item 400 is placed in a hole 200h of the platform 200. The picking portion 100 can be introduced in the crenels 200s so as to rotate the article 400, with the help of the orientation wheels 241.

Carousel action configuration enables the user to have additional storage retrieval/put away degrees of freedom such as first in first out for items 400, avoiding problems of expiry date. This allows storage and access to a variety of non-same articles 400. The carousel action configuration is also available for the platform 210 with the columns 211.

The AFC can be raised to an intermediate level (together with a channel or column support structure pattern / platform 200, 210), allowing the rotation of cargo 400 in their position without having to take them out of the storage cell 300 for such service. For example, it is possible to perform a rotation of a big piece of cheese (e.g. cheese wheel or cheese block) or of bottles of liquid in which separation of heavier sediment may occur, individually or grouped together, without extracting them from the storage cell 300. It is also possible to rotate or agitate a container containing a liquid to avoid stagnation of the liquid in the recipient. This is also possible to trees, flowers or any kind of plant. The AFC can achieve its capability to carry-out such action at a distance on the basis of its coupling with the corrugated platform, thanks to its pattern performing together with the collector / picking portion.

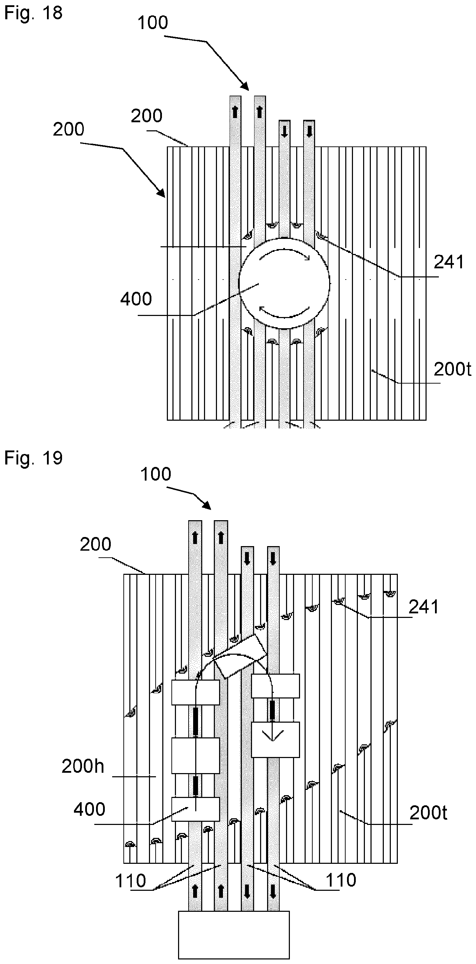

Figure 18 represents a top view of the channelled platform 200 according to another embodiment of the present invention with orientation wheels.

In the illustration of figure 18, the chains 6 of the two picking portions 110 on the left go in one direction, and the chains 6 of the two picking portions 110 on the right go in opposite direction. This allows the rotation of the article 400, with or without the help of the wheels 241. That is, one or more of the conveying elements 6 of one or more picking portions 110 can be driven in opposite direction to other one or more of the conveying elements 6 of other picking portion 110.

Figure 19 represents a top view of the channelled platform 200 according to another embodiment of the present invention with orientation wheels 241.

The same applies for the illustrations of figure 19, with a dedicated path. The positions of items 400 in the hole 200h of the platform can be managed by driving the conveying element in opposite directions. This may e.g. avoid problems of expiry date.

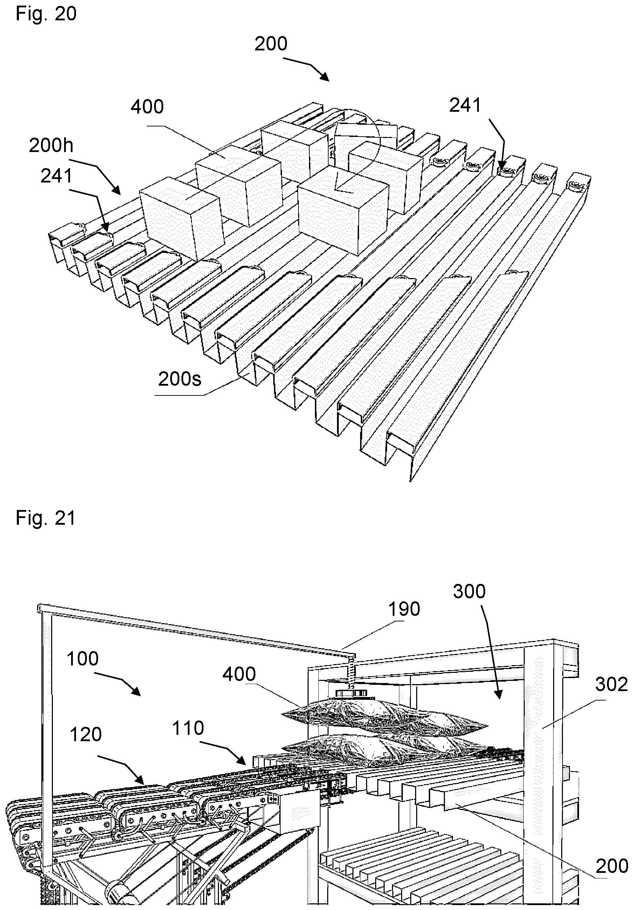

Figure 20 represents a perspective view of the channelled platform 200 according to another embodiment of the present invention with orientation wheels 241.

Together, with the platform 200, the conveying device 100 can manipulate the cargo as follows: by manipulating the direction of chain, 6, the height of the AFC and the platform 200, the cargo 400 inside the storage cell 300 can be switched from one position to another, from one path to another. This enables the conveying device 100 to act as a cargo position/path switching facility.

Figure 21 represents a perspective view of the conveying device 100 according to another embodiment of the present invention with a grabbing system 190.

With the combination of the picking portion 110 and the grabbing system 190 (top lifting unit), it is possible to stack items 400 on top of the other.

The grabbing system 190 allows to be used as a barrage mechanism allowing the picking portion 110 to pick the bottom item 400 from a pile of items 400, together with the extraction by the picking portion 110.

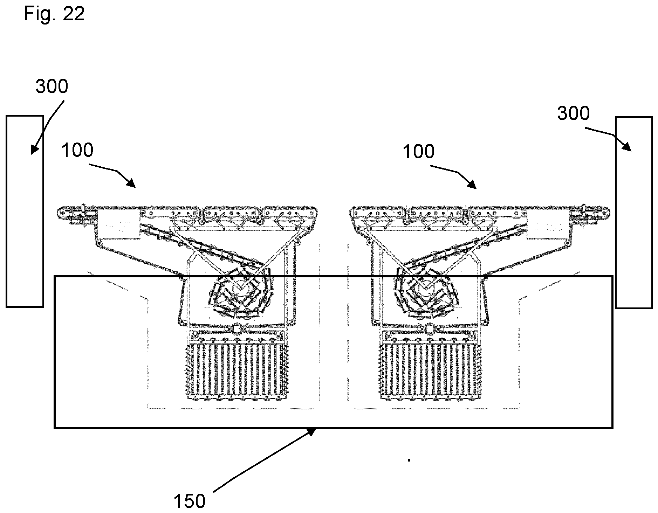

Figure 22 represents two conveying devices installed on opposite directions.

Two conveying devices 100 are installed in opposite directions. This allows to perform the above mentioned operations with two storage cells 300 face to face.

The two conveying devices 100 may be installed on common frame 150. The common frame 150 can be on e.g. a stacker crane.

Similarly, it is also possible to have one conveying device comprising two picking portions 110, preferably arranged on opposite sides of the conveying device 100.

It is of course understood that obvious improvements and/or modifications for one skilled in the art may be implemented, still being under the scope of the invention as it is defined by the appended claims.

### List of reference signs

1 rigid central support column
2 rigid central support column
3 rigid side support column
4 articulated units or segments
5 chain rotation support bearing
6 chain
7 support leg or foldable wheeled leg
8 cable pulling / releasing foldable wheeled leg
9a foldable support column fixing actuation unit
9b cable pulling / releasing actuation unit for the articulated foldable column (AFC)
10 foldable legs - lowering / increasing height of storage cell column
11 foldable legs - lowering / increasing height of storage cell column
12 foldable legs - lowering / increasing height of storage cell column
13 articulated foldable support column - flexible position
14 articulated foldable support column - arranged in circular form taking wheel
reduced space
15 chain portion returning from the outside into the inside
16 structure on which foldable articulated columns is rolled
17 chain direction change bearings
18 chain actuation motor
19 screw / spring arrangement allowing the change of the height inside the zig zag arrangement
20 connector sliding changing the zig zag pattern position
21 reinforcement bars
22 structural vertical bars
23 structural horizontal bar (fixed)
23a structural horizontal bar (fixed)
24 actuators to change top bar height
25 actuators to change top bar height
26 actuators to change top bar height
27 chain height change facilitator
28 chain height change facilitator
28.1 chain direction change wheel
28.2 speed accelerator central cylinder
28.3 speed accelerator articles twin cylinder
28.31 speed accelerator articles twin cylinder
28.32 speed accelerator articles twin cylinder
28.4 speed accelerator
29 external cover
30 horizontal height changing bars
31 horizontal height changing bars
32 horizontal height changing bars
33 height changing mechanism
34 height changing mechanism
35 height changing mechanism
36 activation of height change
37 activation of height change
38 activation of height change
40 forward / backward actuator of main structure
41 forward / backward actuator for the raising / lowering of the support wheels foldable legs
42 activation band against which the actuator 40 is rotating
43 activation cable folding / unfolding support wheels
44 support wheels
45 support wheels foldable legs
47 connector between one foldable column unit and another
48 chain support wheel
50 main body of Foldable Column Unit (FCU)
51 pin for folded position
52 pin for upright position
53 fixation clip between one foldable column unit and another
54 lock/unlock for the fixation clip
55 fixation bars to the fixing actuation unit
100 conveying device
110 picking portion
110a articulated arm
110b articulated buffer portion
120 receiving portion
190 grabbing system or suction system
200 support plate with corrugated or serrated shape
200b support plate low floor
200c lower crenel of support plate
200h hole of platform
200s upper crenel of support plate
200t support plate high floor
210 support plate with columns
210c lower crenel
210p support plate - main plate
210t support plate high floor
210s upper crenel
211 columns
230 active or non-active conveyor belt
240 box for orientation wheel
241 orientation wheel
300 storage cell
301 curtain
302 (structural) post of storage cell
400 articles
NS normal speed
HS high speed
S1 "end of storage cell depth" sensor
S2 "reached articles already in" sensor
S3 "new articles reached AFC tip" sensor
S4 flexible connector for sensor
S5 feedback back electrical cables for sensor
H height of corrugation
W1, W2 width of corrugation

## Claims

1. A conveying device (100), comprising :
- a picking portion (110), arranged to load or unload an item (400) from a storage area (300),
- a receiving portion (120), adjacent to the picking portion (110),
- at least one conveying element (6), such as a chain or a belt, for transporting the item (400) between the picking portion (110) and the receiving portion (120),
wherein the picking portion (110) comprises an articulated arm (110a) comprising a picking head (110h) arranged to be movable between :
- an extended position to load or unload the item (400),
- a retracted position,
wherein the articulated arm (110a) comprises an articulated buffer portion (110b) connected to the picking head (110h) and arranged to unwind when the picking head (110h) moves to the extended position.

2. The conveying device (100) according to the preceding claim, wherein an unwound part of the articulated buffer portion (110b) is arranged to form the picking head (110h) in the extended position.

3. The conveying device (100) according to any one of the preceding claims,
wherein the at least one conveying element (6) is arranged on the picking portion (110) and/or on the receiving portion (120).

4. The conveying device (100) according to any one of the preceding claims,
wherein the at least one conveying element (6) has a conveying buffer portion (6b).

5. The conveying device (100) according to the preceding claim, further comprising an actuator (40) arranged to adjust the length of the conveying buffer portion (110b).

6. The conveying device (100) according to any one of the preceding claims,
wherein the receiving portion (120) is arranged on a back side of the picking portion (110).

7. The conveying device (100) according to any one of the preceding claims,
wherein the articulated arm (110a) is formed of a plurality of articulated segments linked or articulated together.

8. The conveying device (100) according to the preceding claim, further comprising a locking device arranged to :
- lock the unwound articulated segments (4) together when the picking head (110h) moves to the extended position, and/or
- unlock the wound articulated segments (4) when the picking head (110h) moves to the retracted position.

9. The conveying device (100) according to any one of the preceding claims,
wherein the articulated buffer portion (110b) is arranged to be wound when the picking head (110h) moves to the retracted position.

10. The conveying device (100) according to any one of the preceding claims,
wherein the articulated arm (110a) comprises at least one support leg (7).

11. The conveying device (100) according to the preceding claim, wherein the at least one support leg (7) has one or more wheels, or sliding means such as a sliding plate.

12. The conveying device (100) according to any one of claims 10 to 11, wherein the at least one support leg (7) is arranged to be foldable.

13. The conveying device (100) according to any one of claims 10 to 12, wherein the articulated arm (110a) comprises a plurality of support legs (7), preferably arranged along a longitudinal direction of the articulated arm (110a).

14. The conveying device (100) according to any one of the preceding claims, further comprising a frame supporting the picking portion (110), the receiving portion (120) and the conveying element (6), and arranged to be placed in front of the storage area (300).

15. The conveying device (100) according to any one of the preceding claims, comprising a plurality of picking portions (110), receiving portions (120) and conveying elements (6) arranged in rows.

16. The conveying device (100) according to the preceding claim, wherein at least one of the plurality of conveying elements (6) is arranged to be activated in a conveying direction different from the conveying direction of the other conveying elements (6) of the plurality of conveying elements (6).

17. The conveying device (100) according to any one of the preceding claims, further comprising a grabbing system (190) or suction system, and preferably the picking portion (110) and the grabbing system (190) or suction system are configured to lift or retrieve a top item (400) or a bottom item (400).

18. The conveying device (100) according to any one of the preceding claims,
wherein the articulated arm (110a) is arranged to rotate or agitate the item (400) stored in the storage area (300), or to acknowledge and/or count one or more items (400) in the storage area (300) or to perform stock take of items (400).

19. The conveying device (100) according to any one of the preceding claims, further comprising a liquid sprayer, such as a water sprayer, or a gas sprayer, such as a compressed air sprayer or an air sprayer.

20. The conveying device (100) according to any one of the preceding claims, comprising two picking portions (110), preferably arranged on opposite sides of the conveying device (100).

21. A channelled platform (200) arranged to receive the picking portion (110) of the conveying device (100) according to any one of the preceding claims.

22. The channelled platform (200) according to the preceding claim, comprising protrusions or grooves (200c, 200s) arranged to form a channel configured to receive the picking portion (100).

23. The channelled platform (200) according to the preceding claim, wherein the protrusions or the grooves (220c, 200s) have a dimension of at least 5 cm high and/or 10 cm wide.

24. The channelled platform (200) according to the any one of claims 21 to 23, wherein at least one channel of the channelled platform (200, 210) is open on one or more sides of the channelled platform (200, 210).

25. The channelled platform (200) according to the any one of claims 21 to 24, further comprising a hole (200h), such as a hole having a round shape or an oval shape, for receiving the item (400), and preferably one or more wheels (241) or one or more guiding portions arranged on sides of the holes (200h).
